(19) Europäisches Patentamt
European Patent Office
Office européen des brevets

(11) **EP 2 157 002 B1**

(12) **FASCICULE DE BREVET EUROPEEN**

(45) Date de publication et mention de la délivrance du brevet:
**16.03.2011 Bulletin 2011/11**

(51) Int Cl.:
***B60W 40/10*** *(2006.01)* ***B60T 8/172*** *(2006.01)*

(21) Numéro de dépôt: **09305692.7**

(22) Date de dépôt: **21.07.2009**

(54) **Procédé de détermination de la dérive d'un véhicule automobile**

Verfahren zur Bestimmung des Schwimmwinkels eines Kraftfahrzeugs

Method of determining the side slip of a motor vehicle

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **20.08.2008 FR 0855638**

(43) Date de publication de la demande:
**24.02.2010 Bulletin 2010/08**

(73) Titulaire: **Renault s.a.s.**
**92100 Boulogne-Billancourt (FR)**

(72) Inventeurs:
• **Bouet, Christophe**
**92370, CHAVILLE (FR)**
• **Debernard, Eric**
**78960, VOISINS-LE-BRETONNEUX (FR)**
• **Meyrignac, Jean-Guillaume**
**92380, GARCHES (FR)**

(56) Documents cités:
EP-A- 0 788 955    EP-A- 0 816 817
EP-A- 1 396 372    EP-B- 1 021 326
EP-B- 1 549 536    DE-C- 10 105 298

**Description**

La présente invention concerne principalement un procédé de détermination de la dérive d'un véhicule automobile (voir EP1021326B).

Les systèmes pilotés du châssis, tels que les systèmes de contrôle global du châssis (GCC) ou les systèmes de stabilité programmée (ESP), ont besoin d'une estimation de l'angle de dérive du véhicule.

A l'heure actuelle, il n'existe pas de système de mesure de l'angle de dérive industrialisable en série.

En effet, la mesure de l'angle de dérive d'un véhicule se fait le plus souvent dans le cadre d'essais, sur des pistes privées, par des moyens optiques qui déterminent à l'aide de balises le déplacement du véhicule par rapport au sol. La reconstitution de la trajectoire du véhicule se fait avec l'angle de braquage des roues et permet de reconstituer la dérive du train observé, donc du véhicule.

Au niveau industriel (hors essais), la mesure de l'angle de dérive n'est donc à ce jour pas possible et seule une estimation de la dérive est mise en oeuvre. Or les dispositifs permettant une estimation de l'angle de dérive du véhicule ne permettent pas d'obtenir une précision qui soit toujours satisfaisante.

Par exemple, les systèmes de stabilité programmée ESP (ou contrôle de trajectoire) utilisent habituellement une reconstitution de la dérive d'un train à partir de capteurs permettant des mesures de l'angle volant, de la vitesse de rotation des roues, de la vitesse de lacet, etc.

Mais cette reconstitution donne une estimation de la dérive au niveau du train qui peut être assez imprécise suivant la qualité des mesures effectuées et la qualité du modèle utilisé pour cette reconstitution. On parle alors d'estimateur de dérive.

La présente invention a pour but de remédier à ces inconvénients en proposant une solution visant à estimer la dérive d'un véhicule de manière plus précise et fiable, par d'autres moyens de mesure que les capteurs évoqués ci-dessus.

Plus précisément, le procédé selon les revendications 1 ou 2 de l'invention comprend des étapes consistant à :

- déterminer les efforts générés par le moteur et le système de freinage du véhicule au niveau d'un pneu,
- mesurer les efforts selon l'axe longitudinal et les efforts selon l'axe transversal d'un capteur d'effort au niveau dudit pneu, et
- déterminer l'angle de dérive du véhicule automobile en fonction de ladite détermination des efforts générés par le moteur et le système de freinage du véhicule au niveau du pneu, et de ladite mesure des efforts mesurés selon l'axe longitudinal et transversal dudit capteur d'effort.

De préférence, lesdits efforts générés par le moteur et le système de freinage du véhicule au niveau d'un pneu sont déterminés par le couple généré par le groupe motopropulseur du véhicule, et par le couple généré par le système de freinage du véhicule, au niveau dudit pneu.

Avantageusement, le couple généré par le groupe motopropulseur et le couple généré par le système de freinage au niveau dudit pneu sont déterminés par des étapes consistant à :

- déterminer le couple moteur,
- déterminer la pression de freinage, et
- déterminer le rapport de boîte engagé.

Dans un mode de réalisation, l'angle de dérive (δ) du véhicule est déterminé selon l'équation :

$$\delta = \arctan\left[(Fx\_capteur - Fx\_moteur\_frein) / Fy\_capteur\right].$$

Dans un autre mode de réalisation, le procédé selon l'invention comprend des étapes consistant à :

- déterminer les efforts de résistance et de frottements au niveau dudit pneu,
- déterminer les efforts aérodynamiques de résistance à l'environnement au niveau dudit pneu,
- déterminer les efforts de carrossage au niveau dudit pneu,
- et déterminer l'angle de dérive (δ) du véhicule selon l'équation :

$$\delta = \arctan\left[(Fx\_capteur - Fx\_moteur\_frein - Fx\_carrossage - Fx\_aéro - Fx\_RR) / (Fy\_capteur - Fy\_carrossage)\right]$$

Avantageusement, ledit capteur d'effort est disposé dans la suspension, dans le roulement dudit pneu, ou encore dans l'arbre de transmission.

De préférence, le procédé selon l'invention comprend en outre une étape consistant à transmettre la valeur de l'angle de dérive vers un système électronique de stabilité programmé (ESP) du véhicule automobile, ou vers un autre système piloté du châssis.

Selon un autre de ses objets, l'invention concerne un programme d'ordinateur, comprenant des instructions de code de programme pour l'exécution des étapes du procédé selon l'invention lorsque ledit programme est exécuté sur un ordinateur.

D'autres caractéristiques et avantages de la présente invention apparaîtront plus clairement à la lecture de la description suivante donnée à titre d'exemple illustratif et non limitatif et faite en référence aux figures annexées dans lesquelles :

- la figure 1 illustre le bilan des efforts principaux subis par un pneu, et
- la figure 2 illustre une simulation de la mise en oeuvre du procédé selon l'invention.

Pour des raisons de clarté de la présente description, l'invention n'est décrite ici que pour une seule roue de véhicule automobile. De préférence, l'invention est mise en oeuvre pour chaque roue dudit véhicule.

Le procédé selon l'invention comprend une étape consistant à mesurer les efforts appliqués à une roue, c'est-à-dire au niveau du pneu de la roue.

A cet effet, l'invention met en oeuvre des moyens pour mesurer les efforts appliqués à la roue comprenant au moins un capteur d'efforts, ou tout système de mesure des efforts dans les éléments de guidage du plan de roue, permettant de dissocier au moins deux axes principaux dans un plan (X, Y) parallèle au sol.

En l'espèce un capteur d'efforts selon l'invention comprend des jauges de déformation, ou jauges de contraintes, qui permettent d'associer la contrainte dans la jauge à un effort dans l'axe principal de la jauge ou de l'élément rigide subissant la contrainte, et ainsi de l'élement rigide subissant la contrainte, et ainsi de reconstituer grâce à des moyens de calcul (algorithme) les efforts horizontaux et de préférence également verticaux entrant par la roue.

Les capteurs d'efforts peuvent être disposés au niveau du roulement de ladite roue, ce qui permet de protéger le capteur des agressions extérieures, ou du pneu de ladite roue, ou encore au niveau des différents composants de la liaison au sol qui participent au guidage du véhicule et subissent les efforts, c'est-à-dire de tout élément mécanique permettant de reconstruire par calcul au minimum les composantes horizontales et de préférence l'intégralité du torseur d'efforts appliqué à la roue.

La connaissance de l'effort appliqué au roulement permet de déterminer l'effort au niveau du plan de roue, en l'espèce identique.

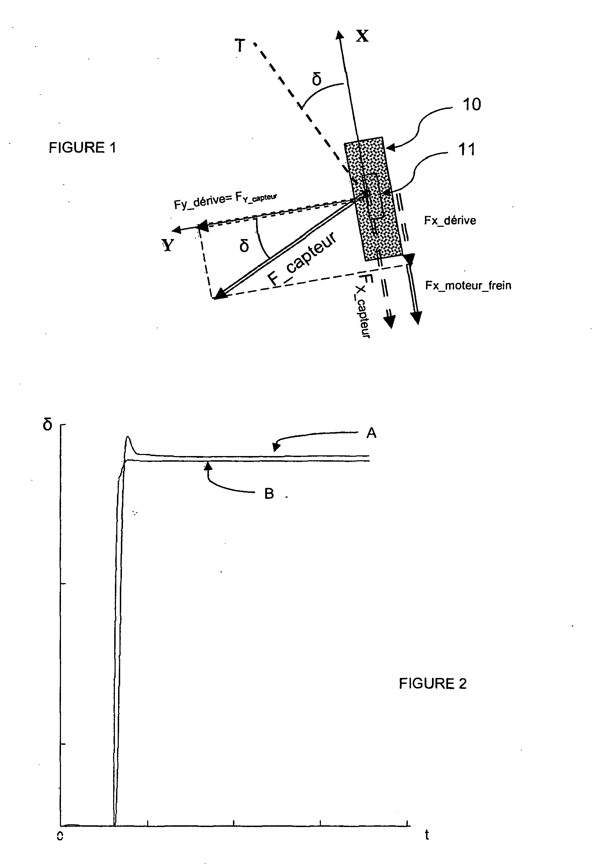

Selon l'invention, comme illustré figure 1, on définit un plan (X, Y) parallèle au sol avec :

- X, l'axe principal longitudinal de la roue, également l'axe longitudinal du roulement, et
- Y, l'axe principal transversal de la roue, également l'axe transversal du roulement.
  On peut ainsi définir
- Z, l'axe vertical, orienté en l'espèce vers le haut.

La dérive pneumatique est l'angle δ reliant la trajectoire T du point de contact pneu sol à l'axe longitudinal X du plan moyen de roue.

L'effort F_Capteur mesuré par le capteur est généré par la dérive et classiquement donné comme perpendiculaire à la trajectoire T du point de contact pneu sol (figure 1). Dans le plan (X, Y), repère principal de la roue et du roulement, l'effort F_Capteur généré par la dérive se décompose en Fx_capteur et Fy_capteur.

Les composantes Fx_capteur et Fy_capteur sont respectivement les résultantes des efforts longitudinaux et transversaux subis par la roue mesurés par le capteur.

Les principaux efforts longitudinaux mesurés dans le plan (X-Y) sont les suivante :

- Fx_moteur, l'effort moteur, généré par le couple moteur et exercé par l'arbre de transmission,
- Fx_frein, l'effort frein, généré par un couple de freinage sur requête du conducteur ou de l'ESP,
- Fx_aéro, les efforts aérodynamiques de résistance à l'environnement,
- Fx_RR, l'effort de résistance et de frottements au niveau dudit pneu/roulement (pneumatique et frottements internes),

- Fx_dérive, la poussée de dérive, due à la rigidité de dérive

Selon l'invention, on définit Fx_moteur_frein les efforts générés par le moteur et le système de freinage du véhicule au niveau d'un pneu, comme étant la résultante des efforts Fx_moteur et Fx_frein.

Les informations usuellement disponibles pour les calculateurs embarqués dans un véhicule sont le couple moteur C_moteur, le rapport de boite engagé R_boîte, et la pression de freinage P_frein.

Ces informations permettent de calculer le couple généré par le groupe motopropulseur C_motoprop et le système de freinage C_frein au niveau du pneumatique.

Par exemple, les efforts longitudinaux de freinage sont déduits du couple freineur en prenant en compte le rayon sous charge de la roue, l'efficacité des freins, et le rayon d'action des freins.

Et les efforts longitudinaux moteur sont déduits par exemple du couple moteur (information du calculateur moteur) en prenant en compte le rayon sous charge de la roue, le rapport de pont, et de boîte.

L'effort associé est, par construction, dans l'axe longitudinal X de la roue et du roulement.

On a donc :

$$Fx\_moteur\_frein = f(C\_motoprop, C\_frein) \quad (1)$$

Les principaux efforts transversaux mesurés dans le plan (X-Y) sont les efforts générés par la dérive et le carrossage, soit

- Fy_carrossage, les efforts (poussée) de carrossage, due à la rigidité de carrossage au niveau dudit pneu, et
- Fy_dérive, la poussée de dérive, due à la rigidité de dérive.
   On a
- Fx_aéro = ½ ρ.Cx.V², avec ρ la masse volumique de l'air, Cx le coefficient de trainée, et V la vitesse longitudinale,
- Fx_RR = f.g.m, avec f un coefficient de résistance au roulement dont la valeur est acquise par expérience, g l'accélération de la pesanteur, et m la masse du véhicule, et
- Fy_dérive = Ky.δ, avec Ky la rigidité de dérive et δ la dérive.

On notera que Ky la rigidité de dérive est en première approximation indépendante de Fz (les efforts verticaux). Toutefois, en réalité, la rigidité de dérive Ky est dépendante de Fz les efforts verticaux, il est donc avantageux de mesurer ceux-ci par un capteur comprenant une jauge de déformation à cet effet, afin d'affiner l'estimation de la dérive δ .

Ainsi, des principaux efforts longitudinaux et transversaux, on peut poser les équations suivantes :

$$Fx\_capteur = Fx\_dérive + Fx\_moteur\_frein + Fx\_carrossage +$$
$$Fx\_aéro + Fx\_RR \quad (2)$$

$$Fy\_capteur = Fy\_dérive + Fy\_carrossage \quad (3)$$

De (2) et (3) , on en déduit :

$$\delta = arctan\ (Fx\_dérive\ /\ Fy\_dérive)$$

soit

$$\delta = arctan\ [(Fx\_capteur-Fx\_moteur\_frein-Fx\_carrossage-$$
$$Fx\_aéro-Fx\_RR)/\quad (Fy\_capteur-Fy\_carrossage)]$$
$$(4)$$

Ainsi, grâce à la mesure des efforts selon les axes principaux X et Y du roulement par le capteur d'efforts, il est aisé de reconstituer un calcul de l'angle de dérive δ.

L'estimation de la dérive δ faite ainsi est plus précise que la reconstruction utilisée dans les modèles actuels.

Les valeurs de Fx_RR et de Fy_carrossage peuvent être déterminées par des modèles (abaques).

Dans un autre mode de réalisation, on peut négliger certaines grandeurs de l'équation (4), de sorte que :

$$\delta = \text{arctan } [(\text{Fx\_capteur} - \text{Fx\_moteur\_frein}) / \text{Fy\_capteur}].$$

La précision de l'estimation selon l'invention est illustrée figure 2.

Sur la figure 2, la courbe A illustre la dérive 5 en fonction du temps t, obtenue par un calcul réalisé avec un logiciel permettant de simuler le comportement véhicule lors d'une manoeuvre correspondant à un coup de volant.

La courbe B illustre la dérive δ en fonction du même temps t, obtenue par le procédé selon l'invention pour la même manoeuvre .

A l'exclusion de la surtension transitoire, la dérive δ calculée par la présente invention est donc très proche de la dérive pneumatique réelle.

**Revendications**

**1.** Procédé de détermination de la dérive d'un véhicule automobile, comprenant des étapes consistant à :

- déterminer les efforts générés par le moteur et le système de freinage du véhicule (Fx_moteur_frein) au niveau d'un pneu,
- mesurer les efforts selon l'axe longitudinal (Fx_capteur) et les efforts selon l'axe transversal (Fy_capteur) d'un capteur d'effort au niveau dudit pneu, et
- déterminer l'angle de dérive (δ) du véhicule automobile en fonction de ladite détermination des efforts générés par le moteur et le système de freinage du véhicule (Fx_moteur_frein) au niveau du pneu, et de ladite mesure des efforts mesurés selon l'axe longitudinal (Fx_capteur) et transversal (Fy_capteur) dudit capteur d'effort, **caractérisé en ce que** l'angle de dérive (δ) du véhicule est déterminé selon l'équation :

$$\delta = \text{arctan } [(\text{Fx\_capteur} - \text{Fx\_moteur\_frein}) / \text{Fy\_capteur}].$$

**2.** Procédé de détermination de la dérive d'un véhicule automobile, comprenant des étapes consistant à :

- déterminer les efforts générés par le moteur et le système de freinage du véhicule (Fx_moteur_frein) au niveau d'un pneu,
- mesurer les efforts selon l'axe longitudinal (Fx_capteur) et les efforts selon l'axe transversal (Fy_capteur) d'un capteur d'effort au niveau dudit pneu, et
- déterminer l'angle de dérive (δ) du véhicule automobile en fonction de ladite détermination des efforts générés par le moteur et le système de freinage du véhicule (Fx_moteur_frein) au niveau du pneu, et de ladite mesure des efforts mesurés selon l'axe longitudinal (Fx_capteur) et transversal (Fy_capteur) dudit capteur d'effort, **caractérisé en ce qu'**il comprend en outre des étapes consistant à :
- déterminer les efforts de résistance et de frottements (Fx_RR) au niveau dudit pneu,
- déterminer les efforts aérodynamiques de résistance à l'environnement (Fx_aéro) au niveau dudit pneu,
- déterminer les efforts de carrossage (Fx_carrossage, Fy_carrossage) au niveau dudit pneu,
- et déterminer l'angle de dérive (δ) du véhicule selon l'équation :

$$\delta = \text{arctan } [(\text{Fx\_capteur-Fx\_moteur\_frein-Fx\_carrossage-Fx\_aéro-Fx\_RR})/ (\text{Fy\_capteur-Fy\_carrossage})]$$

**3.** Procédé selon la revendication 1 ou 2, dans lequel lesdits efforts générés par le moteur et le système de freinage du véhicule (Fx_moteur_frein) au niveau d'un pneu sont déterminés par le couple généré par le groupe motopropulseur (C_motoprop) du véhicule, et par le couple généré par le système de freinage (C_frein) du véhicule, au niveau du dit pneu.

**4.** Procédé selon la revendication 3, dans lequel le couple généré par le groupe motopropulseur (C_motoprop) et le couple généré par le système de freinage (C_frein) au niveau dudit pneu sont déterminés par des étapes consistant à :

  - déterminer le couple moteur (C_moteur) ,
  - déterminer la pression de freinage (P_frein) , et
  - déterminer le rapport de boîte engagé (R_boîte) .

**5.** Procédé selon l'une quelconque des revendications précédentes, dans lequel ledit capteur d'effort est disposé dans la suspension ou dans le roulement dudit pneu.

**6.** Procédé selon l'une quelconque des revendications précédentes, comprenant en outre une étape consistant à transmettre la valeur de l'angle de dérive (δ) vers un système électronique de stabilité programmé (ESP) du véhicule automobile.

**7.** Programme d'ordinateur, comprenant des instructions de code de programme pour l'exécution des étapes du procédé selon l'une quelconque des revendications précédentes lorsque ledit programme est exécuté sur un ordinateur.

**Claims**

**1.** Method of determining the side slip of a motor vehicle,
comprising steps involving:

  - determining the forces generated by the engine and by the braking system of the vehicle (Fx_engine_brake) at a tyre,
  - measuring the forces along the longitudinal axis (Fx_sensor) and the forces along the transverse axis (Fy_sensor) of a force sensor that senses force at the said tyre, and
  - determining the side slip angle (δ) of the motor vehicle as a function of the said determined forces generated by the engine and by the braking system of the vehicle (Fx_engine_brake) at the tyre, and of the said measurement of the forces measured along the longitudinal axis (Fx_sensor) and transverse axis (Fy_sensor) of the said force sensor, **characterized in that** the side slip angle (δ) of the vehicle is determined according to the following equation:

$$\delta = \arctan \left[ (Fx\_sensor - Fx\_engine\_brake)/Fy\_sensor \right].$$

**2.** Method of determining the side slip of a motor vehicle,
comprising steps involving:

  - determining the forces generated by the engine and by the braking system of the vehicle (Fx_engine_brake) at a tyre,
  - measuring the forces along the longitudinal axis (Fx_sensor) and the forces along the transverse axis (Fy_sensor) of a force sensor that senses force at the said tyre, and
  - determining the side slip angle (δ) of the motor vehicle as a function of the said determined forces generated by the engine and by the braking system of the vehicle (Fx_engine_brake) at the tyre, and of the said measurement of the forces measured along the longitudinal axis (Fx_sensor) and transverse axis (Fy_sensor) of the said force sensor, **characterized in that** it further comprises steps involving:
  - determining the resistive and frictional forces (Fx_RR) at the said tyre,
  - determining the aerodynamic forces of resistance to the environment (Fx_aero) at the said tyre,
  - determining the camber forces (Fx_camber, Fy-camber) at the said tyre,
  - and determining the side slip angle (δ) of the vehicle using the following equation:

$$\delta = \text{arctan } [(\text{Fx\_sensor-Fx\_engine\_brake-Fx\_camber-} \text{Fx\_aero-Fx\_RR})/(\text{Fy\_sensor-Fy\_camber})].$$

3. Method according to Claim 1 or 2, in which the said forces generated by the engine and by the braking system of the vehicle (Fx_engine_brake) at a tyre are determined by the torque generated by the power plant (C_power plant) of the vehicle and by the torque generated by the braking system (C_brake) of the vehicle at the said tyre.

4. Method according to Claim 3, in which the torque generated by the power plant (C_power plant) and the torque generated by the braking system (C_brake) at the said tyre are determined in steps involving:

- determining the engine torque (C_engine),
- determining the brake pressure (P_brake), and
- determining which gear ratio is engaged (R_gear box).

5. Method according to any one of the preceding claims, in which the said force sensor is located in the suspension or in the running gear of the said tyre.

6. Method according to any one of the preceding claims, further comprising a step involving transmitting the value of the side slip angle ($\delta$) to an electronic stability programme (ESP) system of the motor vehicle.

7. Computer program comprising program code instructions for running the steps of the method according to any one of the preceding claims when said program is run on a computer.

**Patentansprüche**

1. Verfahren zur Bestimmung der Drift eines Kraftfahrzeugs, das Schritte enthält, die darin bestehen:

- die vom Motor und vom Bremssystem des Fahrzeugs (Fx_Motor_Bremse) erzeugten Kräfte im Bereich eines Reifens zu bestimmen,
- die Kräfte entlang der Längsachse (Fx_Sensor) und die Kräfte entlang der Querachse (Fy_Sensor) eines Kräftesensors im Bereich des Reifens zu messen, und
- den Schwimmwinkel ($\delta$) des Kraftfahrzeugs abhängig von der Bestimmung der vom Motor und vom Bremssystem des Fahrzeugs (Fx_Motor_Bremse) erzeugten Kräfte im Bereich des Reifens und von der Messung der Kräfte, die entlang der Längsachse (Fx_Sensor) und der Querachse (Fy_Sensor) des Kräftesensors gemessen werden, zu bestimmen, **dadurch gekennzeichnet, dass** der Schwimmwinkel ($\delta$) des Fahrzeugs bestimmt wird gemäß der Gleichung:

$$\delta = \text{arctan } [(\text{Fx\_Sensor} - \text{Fx\_Motor\_Bremse})/ \text{Fy-Sensor}].$$

2. Verfahren zur Bestimmung der Drift eines Kraftfahrzeugs, das Schritte enthält, die darin bestehen:

- die vom Motor und vom Bremssystem des Fahrzeugs (Fx_Motor_Bremse) erzeugten Kräfte im Bereich eines Reifens zu bestimmen,
- die Kräfte entlang der Längsachse (Fx_Sensor) die Kräfte entlang der Querachse (Fy_Sensor) eines Kräftesensors im Bereich des Reifens zu messen, und
- den Schwimmwinkel ($\delta$) des Kraftfahrzeugs abhängig von der Bestimmung der vom Motor und vom Bremssystem des Fahrzeugs (Fx_Motor_Bremse) erzeugten Kräfte im Bereich des Reifens und von der Messung der entlang der Längsachse (Fx_Sensor) und der Querachse (Fy_Sensor) des Kräftesensors gemessenen Kräfte zu bestimmen, **dadurch gekennzeichnet, dass** es außerdem Schritte enthält, die darin bestehen:
- die Widerstands- und Reibungskräfte (Fx_RR) im Bereich des Reifens zu bestimmen,
- die aerodynamischen Umweltbeständigkeitskräfte (Fx_aero) im Bereich des Reifens zu bestimmen,
- die Radsturzkräfte (Fx_Radsturz, Fy_Radsturz) im Bereich des Reifens zu bestimmen,

- und den Schwimmwinkel (δ) des Fahrzeugs gemäß der Gleichung zu bestimmen:

$$\delta = \arctan\,[(Fx\_Sensor-Fx\_Motor\_Bremse-$$
$$Fx\_Radsturz-Fx\_aero-Fx\_RR)/$$
$$(Fy\_Sensor-Fy\_Radsturz)]$$

**3.** Verfahren nach Anspruch 1 oder 2, bei dem die vom Motor und vom Bremssystem des Fahrzeugs (Fx_Motor_ Bremse) erzeugten Kräfte im Bereich eines Reifens durch das von der Antriebseinheit (C_motoprop) des Fahrzeugs erzeugte Moment und durch das vom Bremssystem (C_Bremse) des Fahrzeugs erzeugte Moment im Bereich des Reifens bestimmt werden.

**4.** Verfahren nach Anspruch 3, bei dem das von der Antriebseinheit (C_motoprop) erzeugte Moment und das vom Bremssystem (C_Bremse) erzeugte Moment im Bereich des Reifens durch Schritte bestimmt werden, die darin bestehen:

- das Motordrehmoment (C_Motor) zu bestimmen,
- den Bremsdruck (P_Bremse) zu bestimmen, und
- die eingelegte Getriebestufe (R_Getriebe) zu bestimmen.

**5.** Verfahren nach einem der vorhergehenden Ansprüche, bei dem der Kräftesensor in der Aufhängung oder in der Lauffläche des Reifens angeordnet ist.

**6.** Verfahren nach einem der vorhergehenden Ansprüche, das außerdem einen Schritt enthält, der darin besteht, den Wert des Schwimmwinkels (δ) an ein elektronisches Stabilitätsprogramm (ESP) des Kraftfahrzeugs zu übertragen.

**7.** Computerprogramm, das Programmcodeanweisungen für die Ausführung der Schritte des Verfahrens nach einem der vorhergehenden Ansprüche enthält, wenn das Programm in einem Computer ausgeführt wird.

FIGURE 1

FIGURE 2

## RÉFÉRENCES CITÉES DANS LA DESCRIPTION

**Documents brevets cités dans la description**

- EP 1021326 B